# EUROPEAN PATENT APPLICATION

(11) **EP 1 046 924 A2**
(43) Date of publication of application: **25.10.2000**
(21) Application number: 00303332.1
(22) Date of filing: 19.04.2000
(51) Int. Cl.: G01S 5/14

(54) **Positioning system**

(30) Priority: 19.04.1999 GB 9908940
(71) Applicant: Silicon Systems (UK) Limited, Belfast BT1 6HD (GB)
(72) Inventor: Hall, Martin David, Brisbane, Queensland 4178 (AU)
(74) Representative: Blatchford, William Michael

(57) **Abstract**

In apparatus and methods for transmitting and receiving correction data for a ranging system such as the Global Positioning System (GPS), a correction data interface unit included in a personal computer supplies DGPS (differential GPS) correction data in real time to GPS receiving circuitry. The interface unit comprises a communications port which is connectible to an Internet channel and a further port which may be connected to the GPS receiving circuitry. By arranging for the interface unit to transmit DGPS correction data over the Internet, using an Internet application protocol which is capable of real-time data transfer, it is possible to transmit correction data to any location where Internet access is possible without having to provide dedicated communication links.

## Description

This invention relates to apparatus and methods for transmitting and receiving correction data for a universal ranging system such as the Global Positioning System (GPS).

GPS is an example of a passive pseusorandom noise (PRN) ranging system. Signals received from GPS satellites allow the determination of three-dimensional position (X, Y and Z) and time data at a GPS receiver by measuring the range of the receiver from a number of satellites. The position data is used for navigation and surveying purposes, whilst timing data (provided by highly accurate clocks in the satellites) allows the receiver to act as a time or frequency reference which may be used, for example, to synchronise data switches in digital telephone exchanges.

Accuracy is limited by natural (atmospheric) losses, and also by intentional degradation of the data made available to civilian users. It is possible to improve the accuracy of the received data by means of Differential GPS (DGPS) techniques. In a DGPS system the ranges of the GPS satellites are measured from a so-called reference receiver which is located at an accurately known position on earth and/or has an accurate timing reference communicated to it, and, from these measurements, estimates of the range, position and timing errors are calculated. These estimates are then used to provide DGPS correction data to improve the position and timing accuracy of other GPS receivers which are located quite close to the reference receiver, typically within 100 miles.

As such, a conventional DGPS system requires a communications channel to be established between the reference receiver and each of the other GPS receivers, which are hereinafter called 'local' receivers. Such a channel is usually a point to point dedicated channel established for the purpose of providing a data path between the reference receiver and a local GPS receiver. The channel has to be established at the cost and convenience of the user. As the required number of local receivers becomes large, the cost and complexity of establishing the communications channel infrastructure becomes correspondingly high. Furthermore, other communication data, which may be used for monitoring or adjusting the GPS receivers to improve reliability or efficiency, cannot be easily sent over the same communication channel.

It is an object of the present invention to improve the transmission of correction data in a universal ranging system.

According to a first aspect of the invention there is provided a correction data interface unit for supplying real-time correction data to receiving circuitry for receiving ranging signals from a universal ranging system, wherein the interface unit comprises: a communications port connectible to an Internet channel; a correction data output connectible or connected to the receiving circuitry; and processing means coupled to the communication port and the data output, the processing means being programmed with a client application to enable the use of an Internet application protocol and configured to transport the correction data from the Internet channel via the port to the output, whereby the correction data is transferred from a remote source via the Internet channel to the receiving circuitry, the Internet application protocol being such that this is performed in real time. "Real time" in this context means within 20 seconds.

The unit may be connected to an Internet channel (or 'the Internet') over which GPS data may be transmitted. Since the Internet infrastructure is an existing, highly accessible world-wide network, accessed simply by connecting apparatus to the Internet using a public telephone network, it is possible to establish communications channels to any number of GPS receivers without having to provide new, dedicated channels. In effect, GPS data may be transmitted to and received from any location where Internet access can be achieved. By using an Internet application protocol which enables real-time data transfer, data may be received by the receiving circuitry at a suitable update rate for efficient operation.

Use of an Internet application protocol which facilitates bi-directional data transfer, allow the unit to transmit data fed to the processing means from, for instance, a data input terminal associated with the unit or from the receiving circuitry itself. In this way the receiving circuitry may be monitored remotely via the Internet, and, by additionally sending control signals over the same Internet channel from the remote location, the receiving circuitry can be controlled remotely for improved reliability and for performing other control and maintenance functions, including updating software in the unit or the receiving circuitry.

The processing means of the interface unit may use an Internet application protocol capable of data transfer between a single remote data source and a single receiver (one-to-one communication), between a single data source and a plurality of receivers simultaneously (one-to-many communication), between a plurality of data sources and a single receiver (many-to-one communication), and between a plurality of data sources and a plurality of receivers simultaneously (many-to-many communication). As such, data may be communicated from a single data source to one other GPS receiver or to a plurality of GPS receivers. Further, data associated with a plurality of GPS equipment may be monitored by one or a plurality of monitoring terminals, connected to the processing means. An example of such an application protocol is the Internet Relay Chat (IRC) protocol, which is capable of real time data transfer in a time interval of less than 20 seconds.

The interface unit may be incorporated in a universal ranging system receiver unit for receiving, for instance, GPS satellite ranging signals, the receiver unit including ranging signal receiving circuitry connected to the processing means so as to receive Differential GPS (DGPS) correction data transmitted via the Internet. The GPS receiver unit is arranged to process the received satellite ranging signals in combination with the correction data to compute corrected GPS data. The DGPS correction data may comprise positional correction data so as to enable a corrected position to be computed, or alternatively, the correction data may comprise timing correction data so as to enable a corrected reference timing signal to be produced.

The invention also includes apparatus for generating corrected output data using signals received from a universal ranging system, comprising a reference receiving station and at least one local receiving station arranged to receive the signals at different geographically spaced locations, the reference station further being arranged to generate correction data for the or each local station wherein the reference station and the or each local station is each programmed to operate according to an Internet application protocol permitting data transmission from the reference station to the respective local station in real time, the reference station and each local station being configured to transmit and receive respectively the correction data using the said Internet application protocol.

According to a further aspect of the invention, there is provided a method of generating corrected output data from ranging signals generated in a universal ranging system, comprising: receiving the ranging signals at a first location: receiving, at the first location, real time correction data derived from the ranging signals as received by a reference receiver at a second location geographically spaced from the first location, and computing the corrected output data derived from the ranging signals received at the first location and from the received correction data; wherein the real-time correction data are received at the first location via an Internet channel by means of an Internet interface unit using an Internet application protocol permitting data transfer from the second location to the first location via the Internet channel in real time.

According to yet a further aspect of the invention, there is provided a method of disseminating correction data for correcting output data generated by at least one receiver receiving ranging signals from a universal ranging system, comprising: providing a reference receiver at a geographical location; receiving the ranging signals using the reference receiver; computing real time correction data representative of ranging errors in the received ranging signals; automatically monitoring an Internet connection associated with the reference receiver; and, in response to receiving a valid request message at the Internet connection from a remote ranging signal receiving location, transmitting the real time correction data via the Internet connection to the remote receiving location using an Internet application protocol which allows transfer of the correction data to the remote location in real time.

The invention will now be described by way of example with reference to the drawings in which:
Figure 1 is a block diagram of a differential GPS system embodying the present invention;
Figure 2 is a block diagram of an alternative differential GPS system embodying the present invention; and
Figure 3 is a functional block diagram of control software for an interface unit used in the systems of Figures 1 and 2.

The systems described below allow GPS data to be both transmitted and received via an Internet channel. In the description, references made to an 'Internet channel' refer to a channel established over what is commonly known as the 'Internet', i.e. the worldwide network of interconnected sub-networks. Data is transported using the Transport Control Protocol/Internet Protocol (TCP/IP) suite. The TCP/IP transport layer protocol provides for end-to-end data transmission, including routing between networks.

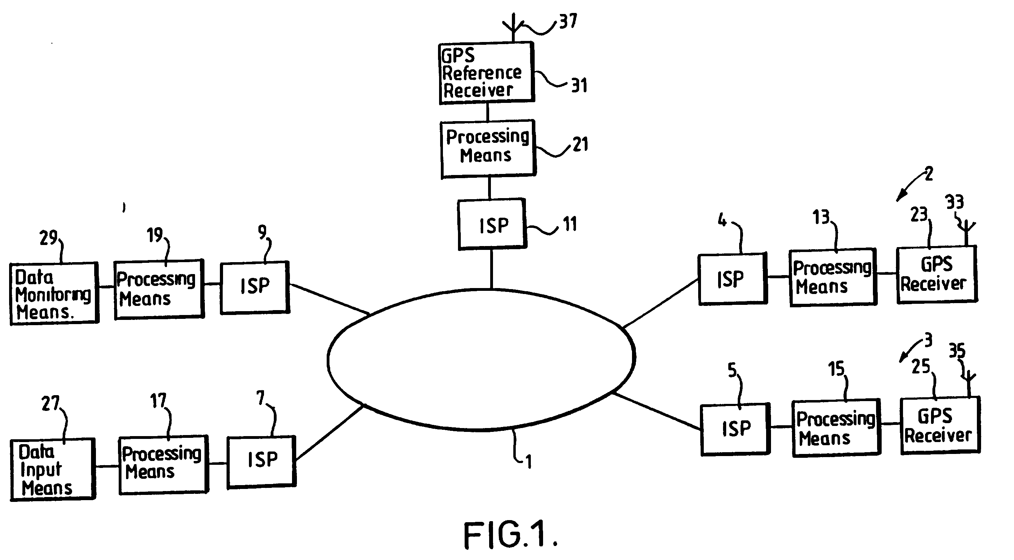

As shown in Figure 1, GPS data is transmitted and/or received over the Internet 1 using processing means 13, 15, 17, 19, 21 which are configured to act as interface units connectible to the Internet 1 and so as to transmit or receive data in real time. In this case, each processing means is connected to the Internet 1 via an Internet Service Provider (ISP), which may provide particularly convenient access using Internet connection means (i.e. a modem) and standard telephone lines to dial up the ISP. As an alternative, larger organisations may obtain direct access to the Internet using leased lines to connect their local area network (or intranet) to the Internet.

By using the Internet 1 to transmit such GPS data, it is possible to establish data communications channels between a large number of terminals at different locations for transmitting and receiving data, and without having to establish dedicated channels. In this way, GPS data may be transmitted to and received from any location where Internet access can be achieved.

The GPS data comprises Differential GPS (DGPS) correction data. Such data may initially be output from a so-called GPS reference receiver 31. The reference receiver 31 receives, via a receiving antenna 37, satellite signals comprising degraded data (both due to atmospheric effects and intentional degradation) which may relate to positional and/or timing information from the satellites currently visible in that satellite system. The reference receiver 31 is usually located at a known position, and/or may have a highly accurate timing source communicated to it, and as such, is able to calculate and provide correction data representing the difference between the known timing and position data and the received data. This correction data is transmitted to other GPS receivers 23, 25 which are located quite close to the reference receiver 31 (typically, within 100 miles). This enables data from degraded satellite signals received via the receiving antennas 23, 25 of the GPS receivers 23, 25 to be corrected for improved position or timing data accuracy.

Transfer of the correction data over the Internet 1 takes place by feeding it to the processing means 21 associated with the reference receiver 31, the data then being transported over the Internet 1 using a suitable Internet application protocol, and being received by other processing means 13, 15 associated with the local GPS receivers 33, 35 using the same Internet application protocol. By connecting the local GPS receivers 23, 25 to the processing means 13, 15, the correction data may be used to correct the degraded positional and/or timing data derived from locally received GPS satellites signals.

Additionally, the GPS data may comprise 'ground-station' data in the form of status data transmitted from the local GPS receivers 23, 25, 37 over the Internet 1 to data monitoring means 29 via processing means 19. In this way, the accuracy, reliability and other performance variables of the receivers 23, 25, 31 can be monitored, and subsequently improved if necessary. The data may alternatively comprise data transmitted over Internet 1 to the local receivers, such as control data for changing control parameters of the receivers 23, 25, 31, or maintenance data for updating or replacing other forms of ground-station data. Such data input and transfer is facilitated by data input means 27 connected to the Internet 1 via processing means 17.

In order to transmit and/or receive the GPS data over the Internet 1, the processing means use a suitable Internet application protocol which transports data on the TCP/IP transport-level suite. The Internet application protocol is a communications protocol the data communication standards of which are arranged to enable data transfer suited to particular applications. Typical application protocols include the File Transfer Protocol (FTP), which provides a mechanism to facilitate the transfer of files between computers, and the Internet Relay Chat (IRC) protocol, which provides for real-time data conferencing over the Internet 1.

Communication via the IRC protocol is facilitated by a public access IRC server. The IRC protocol, when operated over the Internet, provides a teleconferencing system which enables real-time, one-to-one, one-to-many, many-to-one and many-to-many data transfer operations, typically enabling reception within a time period of 20 seconds from the data being transmitted. The IRC protocol operates over networks of IRC servers (the Internet 1 itself comprising networks of many different types of server) which may be connected to each other in a distributed manner. Users, or in this case, processing means, may access other processing means (and so establish a communications channel over which GPS data can be transported) by connecting to the IRC servers using a program, or 'client'. This means that at any one time, thousands of channels may exist over the Internet 1, each channel possibly being accessed by many users. Since the servers are themselves connected, processing means are able to communicate with each other across the globe in real time. The IRC channel may be created by a so-called 'operator' who is able to determine which users (or processing means) are able to communicate over that particular channel. The operator has certain powers to remove users or refuse users initial access to the channel. In this way, access to the channel transporting the GPS data may be restricted, for instance by way of a program which requires a password to be entered before access to the channel is allowed.

The transfer of data between a data source (e.g. reference receiver 31) and processing means such as the associated processing means 21 is performed in real-time to provide frequent and up-to-date refreshing of data. The IRC protocol allows positional correction data to be fed to a mobile GPS receiver within a matter of seconds, typically 5 seconds, of being transmitted. It should be understood that the term 'real-time' indicates that the application protocol enables data transfer over the Internet 1 without the data being stored or buffered at some point along the communications channel for subsequent transport to the receiving apparatus at an arbitrary later time (thereby delaying data reception). Although a real time Internet application protocol may actually delay the transport of data to some extent (e.g. due to a high data usage of the channel), it ensures that the data is transported to the receiving apparatus as soon as it becomes possible for the channel to do so (i.e. the subsequent transport is not performed at an arbitrary later time). 20 seconds is a realistic upper limit for transmission of DGPS data using the IRC protocol. The IRC protocol, if used with units capable of transmitting in both directions, allows not only the transmission of correction data, but also control or maintenance data. It also allows other forms of data (such as status data) to be monitored. Further, by using an application protocol capable of one-to-one communication and one to many communication (between source and receiving apparatus), GPS data transmitted over the Internet 1 from a single transmitting apparatus may be received by a large number of receivers. Use of an application protocol which is capable of many-to-one communications and many-to-many communications enables the transmission of GPS data transmitted from a single or large number of transmitting devices to be received by a large number of receiving devices.

The Internet Relay Chat (IRC) protocol is an example of an application protocol which enables real time one-to-one, one-to-many, many-to-one and many-to-many data transfer, enabling reception virtually always within a time period of 20 seconds from the data being transmitted.

Since the Internet infrastructure is an existing worldwide network it is possible, using an application protocol as described above to establish a number of communications channels allowing GPS data transfer at reduced cost and complexity compared with existing point-to-point communication channels.

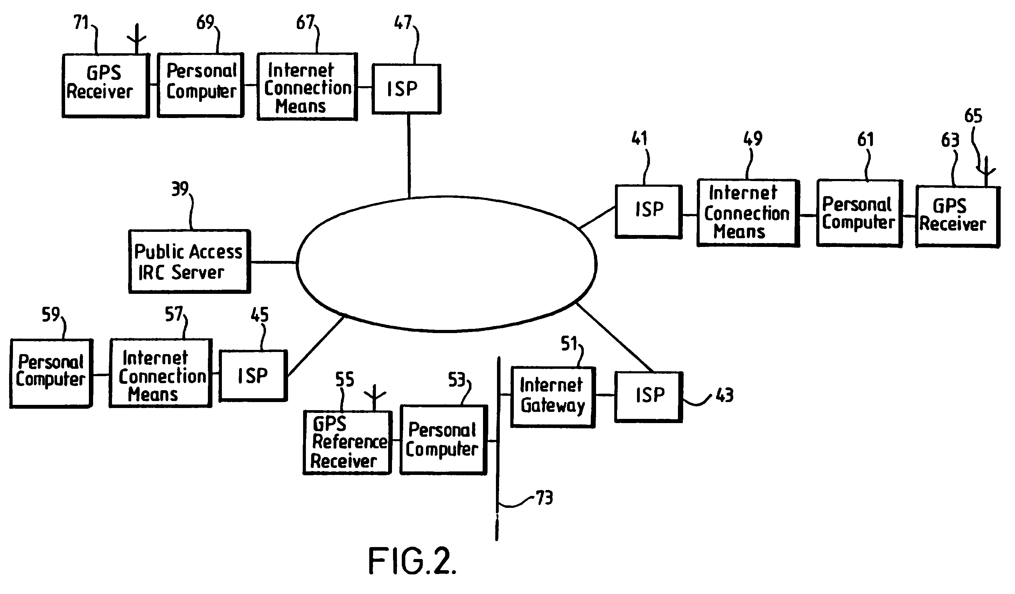

Figure 2 shows a particularly preferred embodiment of the present invention, based on the system described above with reference to Figure 1. In this embodiment, GPS data in the form of DGPS correction data is output from apparatus comprising a GPS reference receiver 55 which is connected to a corporate intranet 73, and processing means in the from of a personal computer (PC) 53. Other PC's and GPS apparatus may be connected to the Internet 1 via the intranet 73. The intranet channel 73 provides access to the Internet 1 via an Internet gateway 51 which is connected to an Internet Service Provider (ISP) 43. Also connected to the Internet channel are two GPS local receivers 65, 71 connectible to the Internet 1 by processing means in the form of PC's 61, 69 and Internet connection means 49, 67 which access the Internet 1 through ISP's 41, 47. Processing means in the form of PC 59 is connected to the Internet 1 by Internet connection means 57 through ISP 45. This PC acts as both data input means and data monitoring means to enable efficient operation of the GPS equipment. This configuration allows DGPS time and positional data to be transmitted from the GPS reference receiver 55 for transport over the Internet 1 for ultimate reception by the GPS local receivers 65 and 71. Furthermore, the status of the receivers 55, 65, 71 can be monitored using the PC 59, which can be used to adjust receivers 55, 65, 71, by allowing the transmission of control and maintenance data in the opposite direction.

As shown in Figure 2, the established channel is created by connecting to a public access IRC server 39 over the Internet 1. Data which is placed on the Internet 1, e.g. the DGPS correction data output from the reference receiver 55, is accessed by the GPS receivers 63, 71 via the PC's 61, 69 to which they are connected, these PC's being configured by a program as interface units to access the channel and to use the IRC protocol to receive the data. Data input and monitoring PC 59 similarly uses such a program to act as an interface unit accessing a different channel, or channels, in order to be able to transmit control and maintenance data, and monitor status data. Such a program may access the channel by prompting the user for a password, obtained by way of subscription payment to the data provider.

The PC's 53, 59, 61, 69 are configured so as to be connectable to the Internet 1, and more particularly to the IRC server 39 by means of interface software. This interface software enables the Internet data to be transmitted and received according to the IRC protocol, and the physical input/output port of each PC is correspondingly configured.

The software also provides for data security, allowing only authorised systems to access the GPS data, each PC which acts as an interface unit for a local GPS receiver including an access code giving it access to the system and, therefore, to the DGPS correction data collected in the system, as well as to the monitoring and control facilities.

As mentioned above, as well as using the interface and overall system to transmit and receive correction data, other forms of data may be transferred across the Internet 1 to provide for improved operation.

For example, status data may be output from each of the receivers 55, 63, 71 to provide updated information relating to different aspects of performance of the respective receiver. As a simple example, the status data might indicate the current data rate or speed of data transfer across a particular link to that receiver. Status information concerning the integrity of the satellite signals may also be relayed across the system via the receivers. Such status data may be used in the system to select signals from particular satellites according to the integrity of their signals as received. If there is a loss of a communication link between different parts of the system, this may also be relayed to users in the form of status data.

By providing a data monitoring unit with its own PC 59, a user (preferably an authorised system administrator) is able to monitor a variety of universal ranging system data such as the above-mentioned status data and, as a result, can improve efficiency of the system. This might be achieved by the administrator checking the performance of the different receivers as well as the integrity of the received satellite. The administrator may enter 'control' data to change one or more parameters of the system, and so alter its operation. Using the data input unit, as is provided by the personal computer 59, the administrator may, for example, turn off receivers which appear to be behaving erroneously, or, if the integrity of the data being received from certain satellites Is poor, the other receivers can be instructed to disregard such signals. By inputting control data, the administrator may also be able to remove unauthorised users from the system, or to remove users who are using the system inappropriately.

The data monitoring PC may be used to input so-called 'maintenance data' for transmission over the Internet 1. Maintenance data is used to set up and/or update software in the system. In this embodiment, the PC's 53, 61, 69 attached to GPS receivers are programmed to use the Internet Relay Chat (IRC) protocol. The required software can initially be sent to and set up in the PC's 53, 61, 69 remotely from the monitoring PC 59. Later, upgraded software may be sent across the Internet 1 from the monitoring PC 59 to other users who require the so-called maintenance data.

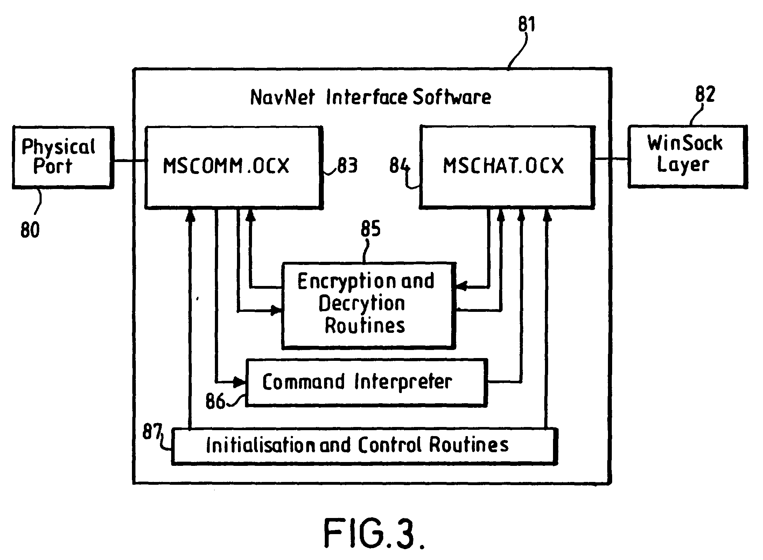

Referring to Figure 3, the interface software 81 contains functional blocks for controlling the processing means which act as the data interface units, as shown in and described with reference to Figures 1 and 2. Physical Port 80 shown in Figure 3 comprises a standard serial port which is found on most personal computers for feeding data to external devices. In the embodiment of Figure 2, the GPS receivers 55, 63, and 71 are connected to the physical ports of the associated PC's 53, 61, and 69 respectively. Those skilled in the art will recognise that 'WinSock Layer' 82 shown in Figure 3 refers to the software mechanism provided by most PC operating systems which enables the PC to communicate over the Internet using the TCP/IP protocol. In this instance, the WinSock Layer if each PC provides a driver interface with its respective internet connection means.

The internet software 81 has the following interacting functional blocks or modules: MSCOMM.OCX 83 and MSCHAT.OCX 84, encryption and descryption routines 85, command interpreter 86, and initialisation and control routines 87.

MSCOMM.OCX 83 is a commercially available software package for setting up and controlling computer ports. The package provides programmers with a tool for setting up and controlling the behavioural attributes of ports, examples of such attributes being the baud rate, the stop bits, and the interrupts. The software package itself is freely downloaded via the Internet from the World Wide Web and is also available as part of the so-called Software Developer's Kit available from Microsoft, Inc. In this embodiment, the setting up and control tool is controlled by the other software functional blocks shown in Figure 3 to set up the serial port of the respective PC's. MSCHAT.OCX 84 is also included in the Software Developer's Kit, or may be downloaded over the Internet from the World Wide Web. This software tool provides programmers with a user interface for controlling an IRC communications session over the Internet 1. Accordingly, the user does not need a detailed knowledge of the IRC protocol in order to set up and control an IRC session over the Internet 1. As shown on Figure 3, the MSCHAT.OCX module 84 is connected to the WinSock Layer 82.

The initialisation and control routines module 87 of the interface software 81 controls the MSCOMM.OCX and the MSCHAT.OCX modules 83, 84. The initialisation routines of the module 87 are used to set up parameters of the OCX modules 83, 84 upon initialisation of a particular processing means. For example, the MSCOMM.OCX module 83 is set up to control the behavioural attributes of the port 80, including the baud rate, the stop bits, and interrupts. The MSCHAT.OCX module 84, is similarly initialised. For example, a table of authorisations is set up such that only authorised operators and/or users may access the system. Further, the setting up of the MSCHAT.OCX module 84 as a user interface is specified, with particular options and commands being made available to users.

The control routine initialisation and control of the module 87 differ from the initialisation routine in that it operates continuously whilst the interface is in operation, the routine performs what may be referred to as 'housekeeping' operations, i.e. routine responds to a predetermined set of data to achieve or maintain efficient operation. As an example, the routine may be configured to monitor which user are currently attached to the IRC channel. In the case of a PC which is operated by a system administrator (e.g. PC 59 in Figure 2), the routine may operate to refuse access to certain users, or to all users if the number of users on the channel exceeds a certain number.

As Figure 3 shows, the command interpreter module 86 takes input signals from the MSCOMM.OCX module 83, and feeds output signals to the MSCHAT.OCX module 84. In effect, it provides the communication between an external device connected to the physical port 80 (be it a GPS receiver, a data input device such as a keyboard, or a reference receiver and PC's or other external devices via the Internet 1, using the IRC protocol. Accordingly, control data fed to the monitoring PC 59 can be transferred via the port and the OCX module 83 to the OCX module 84 for transport using the IRC protocol, e.g. to change control parameters of the reference receiver 55. It should be noted that external devices which have no manual control interface, such as the GPS receivers 55, 63 and 71 are able to feed signals via the command interpreter 86 for transfer over the Internet 1. Such a receiver may be configured to output command signals in certain circumstances e.g. to close its own link with the Internet in a power-save operation, if it determines that no new data has been received over a period of time. Such commands may be used to control the software, and so control the communication of data from particular external devices over the Internet 1.

The encryption and decryption routine module 85 provides a secure, bi-directional data path through which the actual universal ranging data is transferred between the Internet 1 and the respective external device via the physical port 80. Data security is achieved using known data encryption and decryption techniques. Such security restricts data to authorised users, be they subscribers who wish to use correction data, or system supervisors who need to be able to look at the status data. In effect, module 85 provides a transparent link between the respective external, physical, device and the Internet. It also ensures that only authorised users are able to actually obtain access to the data.

## Claims

1. A correction data interface unit for supplying real-time correction data to receiving circuit for receiving ranging signals from a universal ranging system, wherein the interface unit comprises:
a communications port connectible to an Internet channel
a correction data output connectible or connected to the receiving circuit; and
processing means coupled to the communications port and the data output, the processing means being programmed with a client application to enable the use of an Internet application protocol and configured to transport the correction data from the Internet channel via the port to the output, whereby the correction data is transferred from a remote source via the Internet channel to the receiving circuitry, the Internet application protocol being such that this is performed in real time.

2. An interface unit according to claim 1, wherein the correction data output is connectible to GPS receiving circuitry and the processing means are configured to feed differential GPS correction data from the communications port to the correction data output.

3. An interface unit according to claim 1 or claim 2, wherein the processing means are programmed with an Internet application protocol facilitating bi-directional data transfer, the apparatus being configured to transmit data bi-directionally between the communications port and the correction data output.

4. An interface unit according to any preceding claim, further comprising connection means for connecting the processing means to the Internet channel.

5. An interface unit according to any preceding claim, wherein the processing means are programmed with an Internet Relay Chat (IRC) client application to enable the use of the IRC application protocol, the apparatus being configured to transfer the correction data from the communications port to the correction data output using the IRC protocol.

6. An interface unit according to any preceding claim, wherein the Internet application protocol used by the processing means is capable of data transfer between a data source and a receiving apparatus in a time interval of less than 20 seconds.

7. An interface unit according to any preceding claim, wherein the Internet application protocol allows data transfer between one data source and one receiver for receiving signals from a universal ranging system, or between one data source and a plurality of such receivers simultaneously.

8. An interface unit according to claim 7, wherein the Internet application protocol further allows data transfer between a plurality of data sources simultaneously and one said receiver, and further between a plurality of data sources simultaneously and a plurality of said receivers simultaneously.

9. A universal ranging system receiver unit including receiving circuitry for receiving ranging signals from a universal ranging system and incorporating a correction data interface unit according to any preceding claim, the interface unit being connected to the said ranging signal receiving circuitry.

10. A receiver unit according to claim 9, including processing means dedicated to transferring data between the communications port and the receiving circuitry.

11. A receiver unit according to claim 9 or claim 10, arranged to generate position data from a plurality of signals received from satellites of a satellite ranging system, wherein the correction data interface unit is arranged to process position correction data, received at the communications port thereby to allow generation of a corrected position by the said ranging signal receiving circuitry.

12. A receiver unit according to claim 9 or claim 10, arranged to generate timing or frequency reference data from a plurality of signals received from satellites of a satellite ranging system, and wherein the correction data interface unit is arranged to process timing or frequency correction data received at the communications port thereby to allow generation of corrected timing or frequency reference data by the said ranging signal receiving circuitry.

13. A receiver unit according to any of claims 9 to 12, wherein the receiving circuitry includes a control data input and means coupled to the control data input for changing control parameters of the receiver unit in response to control data received via the Internet channel and the interface unit.

14. A receiver unit according to any of claims 9 to 13, wherein the receiving circuitry includes a maintenance data input, and means coupled to the maintenance data input for setting up or updating software contained in the receiver unit in response to maintenance data received via the Internet channel and the interface unit.

15. A receiver unit according to any of claims 9 to 14, wherein the processing means of the correction data interface unit is programmed with an Internet application protocol facilitating bi-directional data transfer between the communications port and the said correction data output, and wherein the receiving circuitry is configured to generate status data which is indicative of the validity of the received ranging signals and to feed the status data to the interface unit for transmission to the Internet channel via the said communications port.

16. Apparatus for generating corrected output data using signals received from a universal ranging system, comprising a reference receiving station and at least one local receiving station arranged to receive the signals at different geographically spaced locations, the reference station further being arranged to generate correction data for the or each local station, wherein the reference station and the or each local station are each programmed to operate according to an Internet application protocol permitting data transmission from the reference station to the respective local station in real time, the reference station and each local station being configured to transmit and receive respectively the correction data using the said Internet application protocol.

17. Apparatus according to claim 16, wherein the reference and local receiving stations are GPS receiving stations and the GPS correction data is differential GPS correction data, the corrected output data comprising position data or timing reference data.

18. Apparatus according to claim 16 or claim 17, further comprising a data monitoring unit for providing a visual output of universal ranging system data and incorporating a data interface permitting transfer of data to and/or from the monitoring unit via an Internet channel using the Internet application protocol.

19. Apparatus according to claim 18, wherein the data monitoring unit is configured to receive the correction data or status data, the status data being generated by the local receiving stations.

20. Apparatus according to claim 16, including a data input unit connected to the data interface.

21. A method of generating corrected output data from ranging signals generated in a universal ranging system, comprising:-
receiving the ranging signals at a first location,
receiving, at the first location, real time correction data derived from the ranging signals as received by a reference receiver at a second location geographically spaced from the first location, and
computing corrected output data derived from the ranging signals received at the first location and from the received correction data,
wherein the real-time correction data are received at the first location via an Internet channel by means of an Internet interface unit using an Internet application protocol permitting data transfer from the second location to the first location via the Internet channel in real time.

22. A method according to claim 21, wherein the Internet application protocol is the Internet Relay Chat (IRC) protocol.

23. A method according to claim 21 or claim 22, wherein the ranging signals are received from a pseudo-random noise satellite universal ranging system.

24. A method according to claim 23, wherein the universal ranging system is the Global Positioning System (GPS).

25. A method according to any of claims 21 to 24, wherein the computed output data are position data.

26. A method according to any of claims 21 to 24, wherein the computed output data are time or frequency reference data.

27. A method according to claim 24, wherein the correction data are differential GPS (DGPS) correction data, the computing step comprising processing the ranging signals received at the first location from a plurality of GPS satellites together with the DGPS correction data to generate a calculated set of GPS data in the form of correct GPS data.

28. A method according to any of claims 21 to 27, further comprising receiving control data via the same Internet channel interface unit, and processing the received control data to change control parameters, the control parameters controlling the receiving operation at the first location.

29. A method according to any of claims 21 to 28, further comprising transmitting status data from the first location to a location remote from the first location via the Internet interface unit and an Internet channel, the status data being indicative of the validity of the received ranging signals.

30. A method according to any of claims 21 to 29, further comprising receiving maintenance data via the said Internet channel and Internet interface unit, and processing the received maintenance data to set up or update software used for the receiving operation at the first location.

31. A method of disseminating correction data for correcting output data generated by at least one receiver receiving ranging signals from a universal ranging system, comprising:
providing a reference receiver at a geographical location,
receiving the ranging signals using the reference receiver,
computing real time correction data representative of ranging errors in the received ranging signals,
automatically monitoring an Internet connection associated with the reference receiver, and
in response to receiving a valid request message at the Internet connection from a remote ranging signal receiving location, transmitting the real time correction data via the Internet connection to the remote receiving location using an Internet application protocol which allows transfer of the correction data to the remote location in real time.

32. A method according to claim 31, wherein the Internet application protocol is an Internet Relay Chat (IRC) protocol.
[Add dependent claims to GPS, position, timing, control and maintenance data, receiving status data].

33. A method according to claim 31 or claim 32, wherein the ranging signals we received from a pseudo-random noise satellite universal ranging system.

34. A method according to claim 33, wherein the universal ranging system is the Global Positioning System (GPS).

35. A method according to any of claims 31 to 34, wherein the computed output data are position data.

36. A method according to any of claims 31 to 34, wherein the computed output data are time or frequency reference data.

37. A method according to claim 34, wherein the correction data are differential GPS (DGPS) correction data, the computing step comprising processing the ranging signals received at the first location from a plurality of GPS satellites together with the DGPS correction data to generate a calculated set of GPS data in the form of correct GPS data.

38. A method according to any of claims 31 to 37, further comprising receiving control data via the same Internet channel interface unit, and processing the received control data to change control parameters, the control parameters controlling the receiving operation at the first location.

39. A method according to any of claims 31 to 38, further comprising transmitting status data from the first location to a location remote from the first location via the Internet interface unit and an Internet channel, the status data being indicative of the validity of the received ranging signals.

40. A method according to any of claims 31 to 39, further comprising receiving maintenance data via the said Internet channel and Internet interface unit, and processing the received maintenance data to set up or update software used for the receiving operation at the first location.
